# EUROPÄISCHE PATENTANMELDUNG

(11) **EP 1 467 516 A1**
(43) Veröffentlichungstag der Anmeldung: **13.10.2004**
(21) Anmeldenummer: 03008449.5
(22) Anmeldetag: 11.04.2003
(51) Int. Cl.: H04L 12/24

(54) **Verfahren zur Behandlung von Alarmen in einem Managementsystem eines Kommunikationsnetzes**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zur Behandlung von Alarmen in einem Managementsystem eines Kommunikationsnetzes, wobei jeder Alarm aufgrund mindestens eines Ereignisses in mindestens einer Netz-Ressource des Kommunikationsnetzes generiert wird. Erfindungsgemäß werden im Managementsystem des Kommunikationsnetzes Alarme strukturiert anhand der Abhängigkeit der den Alarmen zugrunde liegenden Ereignisse geordnet. Mittels eines Computerprogramms eines Computerprogrammproduktes kann das strukturierte Ordnen der Alarme anhand der Abhängigkeit der den Alarmen zugrunde liegenden Ereignisse im Managementsystem des Kommunikationsnetzes bewirkt werden.

## Beschreibung

Die Erfindung betrifft ein Verfahren zur Behandlung von Alarmen in einem Managementsystem eines Kommunikationsnetzes nach dem Oberbegriff des Anspruchs 1.

Die Erfindung betrifft ferner ein Computerprogrammprodukt bzw. ein Computerprogramm zur Behandlung von Alarmen in einem Managementsystem eines Kommunikationsnetzes nach dem Oberbegriff des Anspruchs 10.

Die Erfindung betrifft schließlich eine Netzwerkeinrichtung eines Managementsystems eines Kommunikationsnetzes nach dem Oberbegriff des Anspruchs 12.

Die Prinzipien des Management eines Telekommunikations-Netzes, die auch als TMN-Prinzipien (TMN: Telecommunications Management Network) bezeichnet werden, definieren mehrere Managementschichten für das Management des Telekommunikations-Netzes - beispielsweise eines Mobilfunk-Kommunikations-Netzes -, wobei jede Schicht mit Ausnahme der obersten und der untersten Schicht eine doppelte Funktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine Agenten-Funktion für die nächsthöhere Schicht zu.

Einzelne Einrichtungen bzw. Elemente des Telekommunikations-Netzes (Netz-Ressourcen) üben in einer TMN-Hierarchie die Rolle eines Agenten aus. Agenten müssen relevante Ereignisse (sogenannte events, z.B. Alarme) im Netz möglichst rasch erkennen, ensprechende Mitteilungen - sogenannte *Notifications -* generieren und diese Ereignismeldungen *(event* *reports)* an Manager übertragen, um ein effizientes Netzmanagement zu ermöglichen.

Das Managementnetz eines Kommunikationsnetzes umfasst in der Regel zumindest zwei Managementeinrichtungen in verschiedenen Managementebenen, wobei mindestens eine der zumindest zwei Managementeinrichtungen als Element Manager und mindestens eine der zumindest zwei Managementeinrichtungen als dem Element Manager übergeordneter Netzwerk Manager fungieren.

Element Manager fungieren gegenüber einer tieferen Ebene als Manager und wirken im Hinblick auf die nächsthöhere Managementebene der Netzwerk Manager als Agenten.

Ein solches Managementnetz für ein Mobil-Kommunikationsnetz mit Agent-Manager-Beziehung umfasst beispielsweise Betriebsund Wartungszentren (OMC Operation and Maintenance Center) und mehrere Netzwerkmanagementzentren (NMC Network Management Center). Zusätzlich kann beispielsweise eine Managementebene des Managementnetzes, welche die Netzeinrichtungsebene ("Network Element Level") mit mehreren Basisstationssystemen enthält, vorgesehen sein. In der Netzeinrichtungsmanagementebene ("Network Element Management Level") können beispielsweise Betriebs- und Wartungszentren jeweils die herstellerspezifische Managementfunktionalität für beispielsweise einzelne Basisstationen des Basisstationssystems bereitstellen. In der Netzwerkmanagementebene ("Network Management Level") realisieren Netzwerkmanagementzentren jeweils eine integrierte, in der Regel vom Hersteller unabhängige Management-Funktionalität. Dabei können mehrere Netzwerkmanagementzentren einen Zugriff zu derselben Netzeinrichtung der nächstniedrigeren Managementebene, der Netzeinrichtungsmanagementebene ("Network Element Management Level"), haben, beispielsweise die Netzmanagementzentren zu mindestens einem Betriebs- und Wartungszentrum der nächstniedrigeren Managementebene. Zwischen den Netzeinrichtungen unterschiedlicher Managementebenen sind üblicherweise definierte Schnittstellen zur Informationsübertragung vorgesehen.

Die ITU-T Standards der Serie X.73x definieren für das Management von Telekommunikations-Netzen verschiedene Systemmanagementfunktionen ("Systems Management Functions"), die von Applikationsprozessen in einer zentralisierten oder dezentralisierten Management-Umgebung benutzt werden können. Das Fehler-Management *(Fault Management)* und die Behandlung von Alarmen *(Alarm handling)* als eine der wichtigsten Funktionen zur Netzüberwachung und -kontrolle erfolgt mit Hilfe von Managementeinrichtungen (Management-Systemen). Die Managementeinrichtungen können sich dabei insbesondere auf der *Network Element* Management-Ebene (z.B. OMC, Element Manager) oder *Network Management-Ebene* (z.B. NMC, Network Manager) befinden.

Für die vorliegende Erfindung ist insbesondere der ITU-T Standard X.733 ("Systems Management: *Alarm* Reporting Function") von Bedeutung.

In einem Telekommunikations-Netz gibt es üblicherweise eine große Anzahl von Netz-Ressourcen, die als sogenannte Objektinstanzen (MOI *Management Object Instance)* modelliert werden und Alarme generieren können. Jeder Alarm wird folglich aufgrund mindestens eines Ereignisses in mindestens einer Netz-Ressource des Kommunikationsnetzes generiert. Zwischen verschiedenen Netz-Ressourcen gibt es unterschiedliche Arten von Beziehungen, so dass beispielsweise ein Ereignis in einer Netz-Ressource eine Reihe von weiteren Ereignissen in der gleichen und/oder in anderen Netz-Ressourcen einer Netzeinheit zur Folge haben kann.

Die Abhängigkeiten zwischen einzelnen Ereignissen sollte im Hinblick auf ein effektives und wirksames Fehler-Management auch für das Netz-Management sichtbar sein, d.h. ein sogenannter Hauptalarm, der von anderen Ereignissen im wesentlichen oder völlig unabhängig ist, für eine Instanz A des Kommunkationsnetzes kann selbst die Ursache für eine Sequenz von weiteren einzelnen Alarmen - sogenannten abgeleiteten Alarmen, die mit dem Hauptalarm korreliert sind, - für die Instanz A und/oder andere Instanzen B, C, D ... des Kommunkationsnetzes sein. Um eine effiziente Netzüberwachung zu erreichen, müssen in den Netzelementen die entsprechenden Alarme so korreliert werden, dass diese die auftretenden Abhängigkeiten zwischen Ereignissen wiederspiegeln. Dies ermöglicht, dass ein Operator die reale Ursache einer Sequenz von Ereignissen erkennen und konkrete Schritte zur Fehlerbehebung einleiten kann.

Für die Korrelation von Alarmen haben gemäß ITU-T Standards X.721 und X.733 folgende Parameter eines Alarmberichts *(alarm report)* eine besondere Bedeutung:
a) Der Parameter *"Notification identifier":* Er kennzeichnet eindeutig jeden *alarm report* in einem Managementkontext.
b) Der Parameter *"Correlated notifications":* Wenn dieser Parameter im Alarmbericht *(alarm report)* verwendet wird, enthält er einen oder mehrere Identifikations-Werte einer zugehörigen Alarm-Mitteilung *(Notification identifier*-Werte), welche diejenigen Alarme identifizieren, mit denen der aktuelle Alarm korreliert ist.

Für das Management von Alarmen bieten die Management-Systeme bislang an der Benutzeroberfläche für den Operator sogenannte "Alarmlisten" in tabellarischer Form, wobei in den bekannten Systemen in der Regel jede Zeile der Alarmliste einem Alarm entspricht und die Alarmliste im wesentlichen alle wichtigen Alarmparameter enthält. Dem Operator liegt damit eine sequentielle Alarmliste für das Fehler-Management vor. Üblicherweise werden die Alarme in der Reihenfolge ihres Auftretens (gemäß dem Parameter *"event time")* dargestellt. Neben dieser Reihenfolge ist aber auch eine Sortierung in Abhängigkeit von anderen Alarmparametern (z.B. von dem Parameter *"perceived severity"* zur erkennbaren Schwere der Alarme oder von dem Parameter *"probable cause"* zur mutmasslichen Alarm-Ursache) möglich. Ein Alarm wird nach erfolgreicher Behandlung im Fehler-Management und entsprechender Behebung der Fehlerursache aus der Alarmliste entfernt.

In der Alarmliste werden aus Gründen der Übersichtlichkeit üblicherweise nur "aktive" Alarme geführt. Als "aktive" Alarme werden dabei in den bekannten Management-Systemen diejenigen Alarme bezeichnet, zu denen noch keine "cleared" Alarme erzeugt worden sind, d.h. deren Ursache noch nicht behoben oder deren zu Grunde liegender Fehler noch nicht beseitigt ist. Bei "aktiven" Alarmen ist also eine Erledigung noch nicht erfolgt.

Ein Alarm wird aus der Alarmliste in der Regel entfernt, wenn die beiden nachfolgend genannten Bedingungen erfüllt sind:
- der Alarm ist vom Operator oder automatisch vom Managementsystem bestätigt ("acknowledged");
- der Alarm ist deaktiviert ("cleared").
Dabei erfolgt eine Alarmbestätigung im Regelfall vor der Deaktivierung. Es aber auch möglich, dass ein Alarm schon deaktiviert ist, bevor er bestätigt wurde. In diesem Fall bleibt der Alarm trotz Deaktivierung bis zur Bestätigung in der Alarmliste enthalten. Damit wird sichergestellt, dass der Operator alle Alarme einschließlich der auch bereits schon geklärten ("cleared") Alarme zur Kenntnis nehmen kann.

Aus Operatorsicht umfasst daher das Fehler-Management (Fault *Management)* insbesondere die folgenden Hauptfunktionen:
- die Funktion "Alarm acknowledgement", d.h. das Bestätigen eines Alarms (üblicherweise durch den Operator) mit der Bedeutung, dass der Operator von diesem Alarm Kenntnis genommen hat und ggf. entsprechende Maßnahmen zur Fehlerbeseitigung einleiten wird.
- Die Funktion *"Alarm clearing",* d.h. das Deaktivieren eines vorher "aktiven" Alarms. Im Normalfall wird üblicherweise ein "cleared" Alarm vom System automatisch generiert, wobei aber auch die Möglichkeit besteht, dass der Operator in Ausnahmefällen einen Alarm manuell deaktiviert.

Die Darstellung in Form einer sequentiellen Alarmliste liefert einerseits zwar eine Übersicht über alle "aktiven" Alarme, sie weist aber auch andererseits mehrere Nachteile auf:
a) Obwohl der Hauptalarm und die abgeleiteten Alarme miteinander korreliert sind, ist diese Abhängigkeit nicht sofort sichtbar. Der Operator muss immer zunächst das Feld *"Correlated notification"* zu korrelierten Alarm-Mitteilungen eines beliebigen Alarms lesen und, wenn dieses Feld nicht leer ist (d.h. der aktuelle Alarm ist mit mindestens einem anderen Alarm korreliert), denjenigen Alarm in der Alarmliste suchen, dessen Parameterwert *"Notification identifier"* mit dem gefundenen Wert übereinstimmt.
b) Wenn die Fehlerursache eines Hauptalarms behoben ist, aber eine manuelle Fehlerbehebung ("Clearing") erforderlich ist, muss der Operator nicht nur den Hauptalarm deaktivieren. Ferner hat der Operator alle nur von diesem Hauptalarm abgeleiteten Alarme aus der Liste zu finden, d.h. diejenigen Alarme, deren Parameter *"Correlated notification"* den Parameterwert *"Notification identifier"* des Hauptalarms enthalten, und diese jeweils einzeln zu deaktivieren. Das ist erforderlich, weil mit der Behebung der Fehlerursache für den Hauptalarm implizit auch die davon abgeleiteten Alarme nicht mehr aktiv sind, aber in der Alarmliste aufgeführt bleiben.
c) In analoger Weise müssen alle Alarme vom Operator einzeln bestätigt ("acknowledged") werden.

Der Erfindung liegt daher die Aufgabe zugrunde, ein Verfahren der eingangs genannten Art, ein Computerprogrammprodukt bzw. ein Computerprogramm und eine Netzeinrichtung eines Kommunikationssystems aufzuzeigen, durch welche die angegebenen Nachteile vermieden werden können und insbesondere eine verbesserte und/oder vereinfachte Alarmbehandlung ermöglicht werden kann.

Diese Aufgabe wird gemäß der Erfindung hinsichtlich des Verfahrens durch die Merkmale des Patentanspruchs 1, hinsichtlich des Computerprogrammproduktes durch die Merkmale des Patentanspruchs 10 und hinsichtlich der Netzeinrichtung des Kommunikationssystems durch die Merkmale des Patentanspruchs 12 gelöst. Weiterbildungen und Ausgestaltungen der Erfindung sind insbesondere den abhängigen Ansprüchen zu entnehmen.

Erfindungsgemäß werden im Managementsystem des Kommunikationsnetzes Alarme strukturiert anhand der Abhängigkeit der den Alarmen zugrunde liegenden Ereignisse geordnet.

Durch diese Maßnahme wird eine verbesserte Behandlung von Alarmen zur Verfügung gestellt, indem die Abhängigkeiten zwischen einzelnen Ereignissen im Hinblick auf ein effektives und wirksames Fehler-Management auch für das Netz-Management in einem Telekommunikationsnetz sichtbar bzw. abrufbar aufbereitet vorliegen. Die Erfindung erlaubt eine Behandlung von Alarmen an den Management-Systemen, welche Funktionen verschiedener Management-Ebenen realisieren, beispielsweise das Network Element Management oder das Network Management. In der Regel liegen dabei eine Vielzahl von Netzwerk Element Managern (z.B. OMCs) und eine Vielzahl von Netzwerk Managern (z.B. NMCs) vor.

Das erfindungsgemäße Verfahren ist dabei grundsätzlich für alle Telekommunikationsnetze einsetzbar. Dies umfasst ausdrücklich gearde auch nicht kabelgebundene Telekommunikationsnetze. Denn insbesondere Mobilfunknetze erfordern ein wirksames Fehler-Management.

Die Erfindung ermöglicht eine graphisch-orientierte Behandlung von Alarmen mit entsprechender Darstellung für den Operator an der Benutzeroberfläche für Funktionen verschiedener Management-Ebenen (z.B. Network Element Management oder Network Management) realisierende Management-Systemen.

Die Alarme können vorteilhafterweise anhand der Abhängigkeit der den Alarmen zugrunde liegenden Ereignissen in einer Baumstruktur geordnet werden.

Eine Vereinfachung der Behandlung von Alarmen kann dadurch erzielt werden, dass mit der Bearbeitung eines ersten Alarms auch die Bearbeitung mindestens eines zweiten, ausschließlich mit dem ersten Alarm korrelierten Alarmes erfolgt.

Insbesondere kann mit der Bestätigung eines ersten Alarms auch die Bestätigung mindestens eines zweiten, ausschließlich mit dem ersten Alarm korrelierten Alarmes und/oder mit der Deaktivierung eines ersten Alarms auch die Deaktivierung mindestens eines zweiten, ausschließlich mit dem ersten Alarm korrelierten Alarmes erfolgen.

Liegt neben einem ersten Alarm auch ein dritter Alarm vor, wobei ein zweiter sowohl mit dem ersten Alarm als auch mit dem dritten Alarm korreliert ist, kann mit der Bearbeitung des ersten Alarms auch die Bearbeitung des zweiten Alarmes nur dann erfolgen, wenn bereits eine Bearbeitung des dritten Alarmes stattgefunden hat. Entsprechendes gilt für den umgekehrten Fall einer Bearbeitung des ersten Alarmes vor der des dritten Alarmes.

In Ausgestaltung des erfindungsgemäßen Verfahrens kann die Ordnung der Alarme anhand der Abhängigkeit der den Alarmen zugrunde liegenden Ereignissen an der Benutzeroberfläche (für den Operator) mit Spalten unter Berücksichtigung des Grades der Abhängigkeit dargestellt werden.

Die Ordnung der Alarme anhand der Abhängigkeit der den Alarmen zugrunde liegenden Ereignissen an der Benutzeroberfläche kann dadurch erfolgen, dass die strukturierte Darstellung zu jedem aktiven Alarm Informationen zu der mindestens einen den Alarm generierenden Netz-Ressource des Kommunikationsnetzes und/oder zum Alarmtyp umfasst. Bevorzugt wird dabei von einer Kombination der genannten Möglichkeiten Gebrauch gemacht.

Insbesondere zusätzlich zu den Informationen zu der mindestens einen den Alarm generierenden Netz-Ressource des Kommunikationsnetzes und zum Alarmtyp kann die strukturierte Darstellung zu jedem aktiven Alarm Informationen zu der Schwere des Alarmes und/oder zum Status der Alarmbestätigung umfassen.

Bei der Darstellung der Alarme an der Benutzeroberfläche - beispielsweise mittels mit Text versehnenen Buttons z.B. in Form von Rechtecken für jeden Alarm - können Farbzuordnungen mit bestimmten Informationen verbunden sein oder andere optische Kennzeichnungen vorgenommen werden. So können beispielsweise die Schwere des Alarmes mit Farben wie etwa rot für kritische Alarme und gelb für weniger kritische Alarme und der Status der Alarmbestätigung beispielsweise bei noch nicht erfolgter Bestätigung durch Blinken indiziert werden.

In Weiterbildung des Verfahrens kann eine Darstellung von mit den Alarmen korrelierten Zustandsänderungen des Kommunikationsnetzes erfolgen.

Im erfindungsgemäßen Computerprogrammprodukt zur Behandlung von Alarmen in einem Managementsystem eines Kommunikationsnetzes, wobei jeder Alarm aufgrund mindestens eines Ereignisses in mindestens einer Netz-Ressource des Kommunikationsnetzes generiert wird, sieht das Computerprogramm ein strukturiertes Ordnen der Alarme anhand der Abhängigkeit der den Alarmen zugrunde liegenden Ereignissen im Managementsystem des Kommunikationsnetzes vor. Unter Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Bezüglich des Computerprogrammproduktes kann das Computerprogramm Programmabschnitte zur Durchführung des oben beschriebenen und/oder des im Zusammenhang mit der Figur unten zu beschreibenden Verfahrens vorsehen.

Die erfindungsgemäße Netzwerkeinrichtung eines Managementsystems eines Kommunikationsnetzes zur Behandlung von Alarmen in dem Managementsystem des Kommunikationsnetzes, wobei jeder Alarm aufgrund mindestens eines Ereignisses in mindestens einer Netz-Ressource des Kommunikationsnetzes generiert wird, umfassst Mittel zum strukturierten Ordnen der Alarme anhand der Abhängigkeit der den Alarmen zugrunde liegenden Ereignisse.

Die Netzwerkeinrichtung kann Mittel zur Durchführung des oben beschriebenen und/oder des im Zusammenhang mit der Figur unten zu beschreibenden Verfahrens umfassen.

Die erfindungsgemäße Netzwerkeinrichtung eines Managementsystems bzw. das erfindungsgemäße Kommunikationsnetz mit einem Managementnetz, welches insbesondere zumindest zwei Managementeinrichtungen in verschiedenen Managementebenen umfasst, kann zur Durchführung des erfindungsgemäßen Verfahrens dienen. Dazu können in der Netzeinrichtung bzw. im Kommunikationsnetz entsprechenden Mittel und Einrichtungen vorgesehen sein. Dies umfasst insbesondere Mittel zum Ablauf eines erfindungsgemäßen Computerprogrammes (z.B. eine Recheneinheit, auf der das Computerprogramm geladen ist und ablaufen kann).

Nachstehend wird die Erfindung anhand von Ausfuhrungsbeispielen unter Bezugnahme auf die einzige Figur näher erläutert. Es zeigt die
Figur eine schematische Darstellung einer Baumstruktur von Alarmen anhand der Abhängigkeit der den Alarmen zugrunde liegenden Ereignissen gemäß der Erfindung.

In der Figur ist eine Darstellung einer Baumstruktur von Alarmen anhand der Abhängigkeit der den Alarmen zugrunde liegenden Ereignisse gezeigt. Die Darstellung der aktuellen, vom Management-System intern verwalteten Alarmliste erfolgt im gezeigten Beispiel an der Benutzeroberfläche in Form einer horizontalen, aus mehreren Spalten (Spalte 1, Spalte 2, Spalte 3, ... Spalte n) bestehenden Baumstruktur. Diese Baumstruktur kann auch als Alarmbaum bezeichnet werden.
In der ersten Spalte (*(Spalte 0)*, links außen) werden nur Hauptalarme dargestellt (deren Feld *"Correlated notification"* immer leer ist). Diese Alarme werden nach der zeitlichen Reihenfolge ihres Auftretens aufsteigend oder absteigend sortiert, d.h. der jüngste Hauptalarm steht je nach gewünschter Operatoreinstellung entweder ganz oben oder ganz unten.

Die nächste Spalte *(Spalte 1)* enthält sogenannte abgeleitete Alarme 1. Grades, d.h. Alarme, die als direkte Folge von Hauptalarmen entstanden und mit diesen korreliert sind. Wiederum die nächste Spalte *(Spalte 2)* enthält sogenannte abgeleitete Alarme 2. Grades, d.h. Alarme, die als direkte Folge von Alarmen 1. Grades entstanden und mit diesen korreliert sind. Entsprechendes gilt sinngemäß für weitere Spalten (*(Spalte 3)* ... *(Spalte n)*). Jeder Alarm wird als Rechteck dargestellt, in welchem beispielsweise folgende Alarminformation sichtbar ist:
i) die Objektinstanz (MOI) bzw. der symbolische Name der Netz-Ressource, die den Alarm generiert hat,
ii) der Alarmtyp, wie er im ITU-T X.733 Standard definiert ist.
   Folgende Abkürzungen werden dabei verwendet:
   COM = communication alarm, QOS = quality of service alarm, PER = processing error alarm, EQP = equipment alarm, ENV = environmental alarm.
   Zusätzliche, für den Operator sichtbare Informationen können beispielsweise sein:
iii) die Schwere des Alarmes ("Perceived severity"), d.h. wie schwerwiegend der Alarm ist, angegeben beispielsweise durch die Farbe des Rechtecks mit z.B. rot für kritische Alarme ("critical") und gelb für weniger kritische Alarme ("minor").
iv) der Status der Alarmbestätigung ("Acknowledgement-Status"), wobei beispielsweise ein neuer, vom Operator nicht bestätigter Alarm blinkend und ein bestätigter Alarm nicht blinkend dargestellt wird.

Der Hauptalarm (TPU#37, EQP) in der Spalte *(Spalte 0)* verursacht zwei weitere Alarme (PAC#22, EQP) und (TRX#7, COM) in der Spalte *(Spalte 1)*, wobei der zweite korrelierte Alarm (TRX#7, COM) einen weiteren Alarm (PTP AX #3, QOS) in der Spalte (Spalte 2) zur Folge hat.

Der Alarm 1. Grades (TRX#39, COM) in der Spalte *(Spalte 1)* ist einerseits korreliert mit den beiden Hauptalarmen (CTH WI DA#37, EQP) und (PA DP #27, EQP) aus der Spalte *(Spalte 0)* und hat andererseits den Alarm 2. Grades (ATP TX #78, QOS) in der Spalte *(Spalte 2)* verursacht.

Vom Hauptalarm (PA DP #27, EQP) in der Spalte *(Spalte 0)* ist ferner auch der Alarm 1. Grades (TRX#40, COM) abgeleitet.

Die Darstellung gemäß der Figur bietet dem Operator einen sofortigen Überblick über die aktuelle Alarmsituation und die Abhängigkeit der Alarme voneinander. Die für die Fehlerbehandlung wichtigsten Alarme sind unmittelbar erkennbar. Beispielsweise durch Doppelklick auf ein Alarm-Rechteck erhält der Operator alle Parameterwerte des aktuellen Alarms (wie in der tabellarischen Darstellung) angezeigt.

Wird ein Alarm-Rechteck vom Operator ausgewählt, dann sind beispielsweise folgende Funktionen möglich:
- Funktion "Global alarm clearing"
   Der aktuelle Alarm und alle nur mit diesem Alarm korrelierten Alarme werden deaktiviert. Die Alarme, die schon bestätigt ("acknowledged") waren, werden aus der internen Liste automatisch entfernt und der Alarmbaum wird neu aufgebaut. Automatisch bedeutet dabei im Zusammenhang mit dieser Erfindung eine eintretende Bearbeitungsfolge, ohne dass der Operator diese gesondert veranlassen muss.

### Beispiel 1:

Wird im oberen Teil der Figur der Hauptalarm (TPU#37, EQP) manuell deaktiviert, dann werden automatisch alle abgeleiteten Alarme jeden Grades, d.h. die Alarme (PAC#22, EQP), (TRX#7, COM) und (PTP AX #3, QOS) deaktiviert.

### Beispiel 2

Wenn der Alarm 1. Grades (TRX#7, COM) vom Operator manuell deaktiviert wird, dann wird automatisch auch der abgeleitete Alarm (PTP AX #3, QOS) deaktiviert.

### Beispiel 3

Wird der Hauptalarm (CTH WI DA#37, EQP) manuell deaktiviert, dann wird kein weiterer Alarm automatisch deaktiviert, da der abgeleitete Alarm 1. Grades (TRX#39, COM) auch mit einem anderen Hauptalarm (PA DP #27, EQP) korreliert ist, der noch aktiv ist.
- Funktion "Global alarm acknowledgement"
   Der aktuelle Alarm und alle nur mit diesem Alarm korrelierten Alarme werden bestätigt ("acknowledged"). Die Alarme, die schon deaktiviert ("cleared") waren, werden aus der internen Liste automatisch entfernt und der Alarmbaum wird neu aufgebaut.

### Beispiel 1

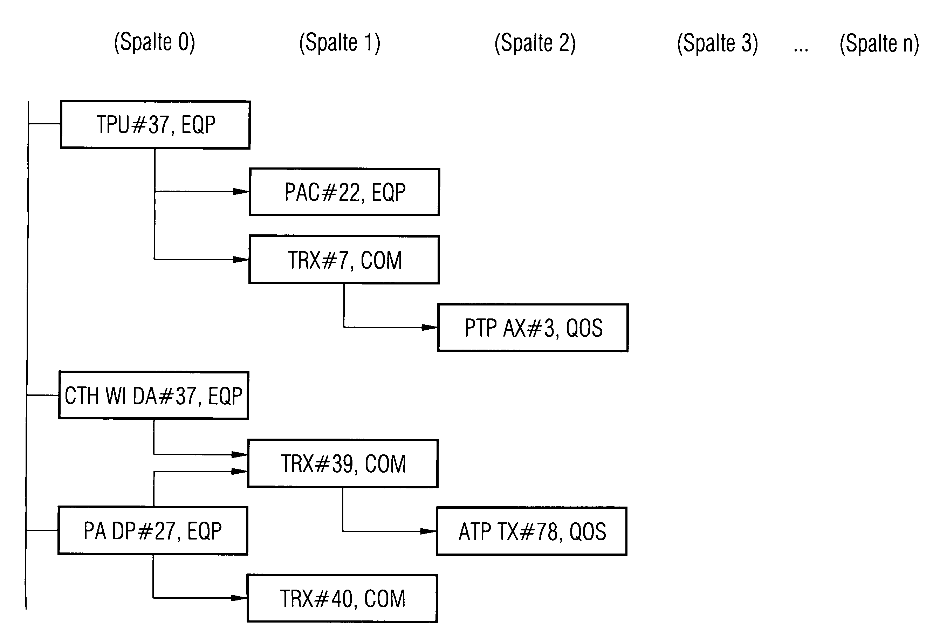

Wird im oberen Bild 1 der Hauptalarm (TPU#37, EQP) vom Operator bestätigt, dann werden automatisch alle abgeleiteten Alarme (PAC#22, EQP), (TRX#7, COM) und (PTP AX #3, QOS) ebenfalls bestätigt.

### Beispiel 2

Wenn nur der Alarm 1. Grades (TRX#7, COM) vom Operator manuell bestätigt wird, dann wird automatisch auch der abgeleitete Alarm (PTP AX #3, QOS) bestätigt.

### Beispiel 3

Wird der Hauptalarm (CTH WI DA#37, EQP) manuell bestätigt, dann erfolgt keine weitere automatische Alarmbestätigung mehr, da der abgeleitete Alarm 1. Grades (TRX#39, COM) auch mit einem anderen Hauptalarm (PA DP #27, EQP) korreliert ist.

Es ist anzumerken, dass das gleiche Verhalten auch gilt, wenn Alarme vom System automatisch bestätigt werden (d.h. die Funktion "Auto-acknowledgement" eingeschaltet ist).
- Funktion "Single alarm clearing / Single alarm acknowledgement"
   Selbstverständlich ist es möglich, nur den selektierten Alarm zu deaktivieren bzw. zu bestätigen. Diese Funktionen sind aber nicht relevant im Kontext von Alarm-Korrelationen.

Erfolgt die Behandlung korrelierter Alarme an einem Betriebsund Wartungszentrum (OMC Operation and Maintenance Center), das mit einem übergeordneten Netzwerkmanagementzentrum (NMC Network Management Center) verbunden ist, dann erzeugt das Betriebs- und Wartungszentrum (OMC) für jeden bestätigten bzw. deaktivierten Alarm eine entsprechende Notification, so dass auch die NMC-Darstellung (Netzwerkmanagementzentrum) automatisch aktualisiert wird.

Das Verfahren kann auch für die zusätzliche Darstellung von Zustandsänderungen ("state change event reports"), die mit den Alarmen korreliert sind, erweitert werden. Damit erhält der Operator einen Gesamtüberblick über die Fehlersituation im Netz.

### Insgesamt bewirkt die Erfindung folgendes:

Die Darstellung der gesamten Alarmsituation als Alarmbaum stellt eine komfortable graphische Oberfläche für die Behandlung von Alarmen dar. Der Operator kann seine Aufmerksamkeit auf die wichtigsten Alarme (*(Spalte 0)*) konzentrieren und entsprechende Maßnahmen zügig einleiten.

Die globalen Mechanismen für "Alarm clearing" und "Alarm acknowledgement" sind wesentliche Hilfsmittel für eine effizientere Netzüberwachung und -kontrolle, vor allem in großen Telekommunikationsnetzen.

Durch die automatische Bestätigung korrelierter Alarme kann vermieden werden, dass einzelne abgeleitete Alarme versehentlich unbestätigt bleiben. Damit wird die Datenkonsistenz im gesamten Managementnetz sichergestellt. Ähnlicherweise wird durch das globale "Clearing" von korrelierten Alarmen gewährleistet, dass keine "Pseudo"-Alarme (deren Ursache längst behoben wurde) in der internen Alarmliste weiter verwaltet werden.

## Patentansprüche

1. Verfahren zur Behandlung von Alarmen in einem Managementsystem eines Kommunikationsnetzes,
wobei jeder Alarm aufgrund mindestens eines Ereignisses in mindestens einer Netz-Ressource des Kommunikationsnetzes generiert wird,
**dadurch gekennzeichnet,**
**dass** im Managementsystem des Kommunikationsnetzes Alarme strukturiert anhand der Abhängigkeit der den Alarmen zugrunde liegenden Ereignisse geordnet werden.

2. Verfahren nach Anspruch 1, dadurch gekennzeichn e t, dass die Alarme anhand der Abhängigkeit der den Alarmen zugrunde liegenden Ereignisse in einer Baumstruktur geordnet werden.

3. Verfahren nach Anspruch 1 oder 2, **dadurch gekennzeichnet, dass** mit der Bearbeitung eines ersten Alarms auch die Bearbeitung mindestens eines zweiten, ausschließlich mit dem ersten Alarm korrelierten Alarmes erfolgt.

4. Verfahren nach Anspruch 3, **dadurch gekennzeichnet, dass** mit der Bestätigung eines ersten Alarms auch die Bestätigung mindestens eines zweiten, ausschließlich mit dem ersten Alarm korrelierten Alarmes erfolgt.

5. Verfahren nach Anspruch 3 oder 4, **dadurch gekennzeichnet, dass** mit der Deaktivierung eines ersten Alarms auch die Deaktivierung mindestens eines zweiten, ausschließlich mit dem ersten Alarm korrelierten Alarmes erfolgt.

6. Verfahren nach einem der Ansprüche 1 bis 5, **dadurch gekennzeichnet, dass** die Ordnung der Alarme anhand der Abhängigkeit der den Alarmen zugrunde liegenden Ereignisse an der Benutzeroberfläche mit Spalten unter Berücksichtigung des Grades der Abhängigkeit dargestellt wird.

7. Verfahren nach Anspruch 6, **dadurch gekennzeichnet, dass** die strukturierte Darstellung zu jedem aktiven Alarm Informationen zu der mindestens einen den Alarm generierenden Netz-Ressource des Kommunikationsnetzes und/oder zum Alarmtyp umfasst.

8. Verfahren nach Anspruch 6 oder 7, **dadurch gekennzeichnet, dass** die strukturierte Darstellung zu jedem aktiven Alarm Informationen zu der Schwere des Alarms und/oder zum Status der Alarmbestätigung umfasst.

9. Verfahren nach einem der Ansprüche 1 bis 8, **dadurch gekennzeichnet, dass** eine Darstellung von mit den Alarmen korrelierten Zustandsänderungen des Kommunikationsnetzes erfolgt.

10. Computerprogrammprodukt zur Behandlung von Alarmen in einem Managementsystem eines Kommunikationsnetzes,
wobei jeder Alarm aufgrund mindestens eines Ereignisses in mindestens einer Netz-Ressource des Kommunikationsnetzes generiert wird,
**dadurch gekennzeichnet,**
**dass** das Computerprogramm ein strukturiertes Ordnen der Alarme anhand der Abhängigkeit der den Alarmen zugrunde liegenden Ereignisse im Managementsystem des Kommunikationsnetzes vorsieht.

11. Computerprogrammprodukt nach Anspruch 10, **dadurch gekennzeichnet, dass** das Computerprogramm Programmabschnitte zur Durchführung des Verfahrens nach einem der Ansprüche 2 bis 9 vorsieht.

12. Netzwerkeinrichtung eines Managementsystems eines Kommunikationsnetzes zur Behandlung von Alarmen in dem Managementsystem des Kommunikationsnetzes,
wobei jeder Alarm aufgrund mindestens eines Ereignisses in mindestens einer Netz-Ressource des Kommunikationsnetzes generiert wird,
**dadurch gekennzeichnet,**
**dass** Mittel zum strukturierten Ordnen der Alarme anhand der Abhängigkeit der den Alarmen zugrunde liegenden Ereignisse vorhanden sind.

13. Netzwerkeinrichtung nach Anspruch 12, **dadurch gekennzeichnet, dass** die Netzwerkeinrichtung Mittel zur Durchführung des Verfahrens nach einem der Ansprüche 2 bis 9 umfasst.

14. Kommunikationsnetz mit einer Netzwerkeinrichtung nach Anspruch 12 oder 13.
